# EUROPÄISCHE PATENTSCHRIFT

(11) **EP 3 658 437 B1**
(45) Veröffentlichungstag und Bekanntmachung des Hinweises auf die Patenterteilung: **01.06.2022**
(21) Anmeldenummer: 18785852.7
(22) Anmeldetag: 27.09.2018
(51) Int. Cl.: B61D 17/12, B61D 27/00, B61C 3/00

(54) **KÜHLKÖRPERABDECKUNG UND ELEKTRISCH BETRIEBENES FAHRZEUG**
HEAT SINK COVER AND ELECTRICALLY OPERATED VEHICLE
CHAPEAU À DISSIPATEUR THERMIQUE ET VÉHICULE À FONCTIONNEMENT ÉLECTRIQUE

(30) Priorität: 27.09.2017 DE 102017217228
(43) Veröffentlichungstag der Anmeldung: 03.06.2020
(73) Patentinhaber: Siemens Mobility GmbH, 81739 München (DE)
(72) Erfinder: BLISSE, Johannes, 91080 Spardorf (DE); QUINDT, Jürgen, 90552 Röthenbach an der Pegnitz (DE); RÜTER, Arnd, 47802 Krefeld (DE)
(86) Internationale Anmeldenummer: PCT/EP2018/076214
(87) Internationale Veröffentlichungsnummer: WO 2019/063667

(56) Entgegenhaltungen:
- EP-A1- 2 078 655
- WO-A1-2017/060032
- DE-A1-102010 026 337
- DE-A1-102013 226 719
- RU-C1- 2 381 113
- US-A- 2 289 910

## Beschreibung

Es wird ein elektrisch betriebenes Fahrzeug angegeben.

Die Druckschrift WO 2017/060032 A1 ist auf ein Verfahren zum Betreiben eines Fahrzeugs und auf ein Fahrzeug gerichtet.

In der Druckschrift DE 10 2010 026 337 A1 ist ein Schienenfahrzeug mit fahrtwindgekühltem Bremswiderstand beschrieben.

Ein Verfahren zum zeitweiligen Erhöhen eines Luftwiderstands eines wenigstens zwei aneinandergekoppelte Wagenkästen aufweisenden Schienenfahrzeugs findet sich in der Druckschrift DE 10 2013 221 551 A1.

Die Druckschrift DE 10 2013 226 719 A1 ist auf ein Dachgehäuse für Schienenfahrzeuge gerichtet.

Eine zu lösende Aufgabe liegt darin, ein Fahrzeug mit einer Kühlkörperabdeckung anzugeben, mit der eine effiziente Kühlung ermöglicht wird und die einen reduzierten Luftwiderstand aufweist.

Diese Aufgabe wird durch ein Fahrzeug mit den Merkmalen des unabhängigen Patentanspruchs gelöst. Bevorzugte Weiterbildungen sind Gegenstand der abhängigen Ansprüche.

Gemäß der Erfindung weist ein elektrisch betriebenes Fahrzeug ein Fahrzeugdach, mindestens eine Kühlkörperabdeckung sowie zumindest einen Bremswiderstand in einem Durchlüftungskörper der zumindest einen Kühlkörperabdeckung auf. Bei dem Fahrzeug handelt es sich bevorzugt um ein elektrisch betriebenes Fahrzeug wie ein Zug.

Erfindungsgemäß umfasst die Kühlkörperabdeckung oder befindet sich in oder an der Kühlkörperabdeckung ein oder mehrere Durchlüftungskörper. Insofern kann die Kühlkörperabdeckung als Kühlkörpergehäuse aufgefasst werden. In dem mindestens einen Durchlüftungskörper befinden sich Lüftungsöffnungen. Die Lüftungsöffnungen sind zu einem Lufteintritt sowie zu einem Luftaustritt vorgesehen.

Erfindungsgemäß weist der Durchlüftungskörper eine Luftdurchstromrichtung auf. Es ist möglich, dass die Luftdurchstromrichtung entlang einer geraden Linie verläuft, im Mittel gesehen und Verwirbelungen nicht berücksichtigt. Insbesondere stellt die Luftdurchstromrichtung eine Verbindungsachse zwischen zwei einander zugeordneten, gegenüberliegenden Lüftungsöffnungen des Durchlüftungskörpers dar.

Erfindungsgemäß ist die Luftdurchstromrichtung quer zu einer Fahrtrichtung des Fahrzeugs orientiert. Insbesondere steht die Luftdurchstromrichtung senkrecht zur Fahrtrichtung. Dabei ist es möglich, dass die Luftdurchstromrichtung sowie die Fahrtrichtung parallel zu einer Bodenfläche, insbesondere Schienen, auf der sich das Fahrzeug bewegt, orientiert sind. Das heißt, die Fahrtrichtung und die Luftdurchstromrichtung können im Mittel horizontal ausgerichtet sein.

Erfindungsgemäß umfasst die Kühlkörperabdeckung eine oder mehrere Einlassklappen sowie eine oder mehrere Auslassklappen. Die mindestens eine Einlassklappe befindet sich an einer Belüftungsseite des Durchlüftungskörpers und die mindestens eine Auslassklappe befindet sich an einer Entlüftungsseite des Durchlüftungskörpers. An der Belüftungsseite tritt Umgebungsluft in den Durchlüftungskörper ein und wird an der Entlüftungsseite aus dem Durchlüftungskörper ausgeblasen. Der Entlüftungsseite und der Belüftungsseite sind entsprechende Lüftungsöffnungen des Durchlüftungskörpers zugeordnet. Es ist möglich, dass im Betrieb des Fahrzeugs die Entlüftungsseite und die Belüftungsseite ihre Rollen vertauschen, beispielsweise abhängig von einer Fahrrichtung des Fahrzeugs. Alternativ sind die Entlüftungsseite und die Belüftungsseite zeitlich unveränderlich.

Erfindungsgemäß sind die Einlassklappe und die Auslassklappe in geschlossenem Zustand längs der Fahrtrichtung des Fahrzeugs ausgerichtet. Mit anderen Worten können Längsachsen der Einlassklappe und/oder der Auslassklappe parallel zur Fahrtrichtung orientiert sein. Sind mehrere Einlassklappen und/oder Auslassklappen vorhanden, so gilt dies bevorzugt für eine Gesamtheit der Einlassklappen und/oder der Auslassklappen. Dass die Einlassklappe und die Auslassklappe in geschlossenem Zustand längs der Fahrtrichtung des Fahrzeugs ausgerichtet kann bedeuten, dass durch die Einlassklappe und die Auslassklappe kein oder kein signifikanter Luftwiderstand erzeugt wird. Das heißt, Außenflächen und/oder die Längsachsen der Einlassklappe und der Auslassklappe können parallel zur Fahrtrichtung des Fahrzeugs orientiert sein, beispielsweise mit einer Toleranz von höchstens 20° oder 5° oder 1°.

Erfindungsgemäß sind die Einlassklappe und die Auslassklappe schräg zur Luftdurchstromrichtung ausgerichtet. Dies gilt insbesondere in geschlossenem Zustand der Einlassklappe und der Auslassklappe.

Erfindungsgemäß sind die Lüftungsöffnungen in Draufsicht gesehen, insbesondere in Richtung parallel zur Luftdurchstromrichtung gesehen, in geschlossenem Zustand zu mindestens 90 % oder 95 % oder vollständig von der je zugehörigen Einlassklappe sowie von der je zugehörigen Auslassklappe bedeckt. Ein Bedeckungsgrad der Lüftungsöffnungen in geöffnetem Zustand durch die Einlassklappe und/oder die Auslassklappe liegt bevorzugt bei höchstens 70 % oder 60 % oder 50 % oder 40 %. Es ist möglich, dass in geöffnetem Zustand die Lüftungsöffnungen in Draufsicht gesehen frei von der Einlassklappe und/oder der Auslassklappe sind.

Erfindungsgemäß ist das Fahrzeug elektrisch betrieben. Dies bedeutet insbesondere, dass das Fahrzeug über einen Elektromotor verfügt, über den eine Antriebskraft des Fahrzeugs für Räder des Fahrzeugs erzeugt wird. Bei dem elektrisch betriebenen Fahrzeug handelt es sich beispielsweise um einen Zug, eine Straßenbahn oder ein teilweise oder vollständig elektrisch betriebenes Straßenfahrzeug wie ein Auto oder ein Lastkraftwagen.

Erfindungsgemäß weist das Fahrzeug ein Fahrzeugdach auf. Dabei ist es möglich, dass das Fahrzeugdach gekrümmt ist. Das Fahrzeugdach kann im Mittel horizontal ausgerichtet sein.

Erfindungsgemäß weist das Fahrzeug einen oder mehrere Bremswiderstände auf. Der mindestens eine Bremswiderstand ist in dem Durchlüftungskörper untergebracht oder es sind mehrere Bremswiderstände in einem Durchlüftungskörper untergebracht oder es sind mehrere Bremswiderstände über mehrere Durchlüftungskörper hinweg verteilt untergebracht. Bei dem Bremswiderstand handelt es sich insbesondere um einen Belastungswiderstand einer Widerstandsbremse, der im generatorischen Betrieb eines Elektromotors eine Last darstellt, die den Motor belastet und abbremst.

Erfindungsgemäß sind die Einlassklappe und die Auslassklappe symmetrisch zu einer Fahrzeugmittelachse angeordnet. Das heißt, durch eine Spiegelung an der Fahrzeugmittelachse lässt sich die Einlassklappe in die Auslassklappe geometrisch abbilden und umgekehrt. Dies gilt insbesondere hinsichtlich einer äußeren Kontur der Einlassklappe sowie der Auslassklappe. Die Fahrzeugmittelachse steht senkrecht zur Fahrtrichtung und vertikal. Insbesondere ist die Fahrzeugmittelachse eine Spurachse und/oder befindet sich mittig zwischen Rädern des Fahrzeugs. Die Fahrzeugmittelachse kann sich auf eine Außenkontur des Fahrzeugs beziehen.

Erfindungsgemäß sind die Lüftungsöffnungen mit einer Toleranz von höchstens 40°, insbesondere höchstens 20° oder 10° oder 5°, parallel zu Seitenflächen des Fahrzeugs ausgerichtet. Die Lüftungsöffnungen können im Mittel vertikal ausgerichtet sein.

Erfindungsgemäß sind die Einlassklappe und die Auslassklappe im geschlossenen Zustand längs der Fahrtrichtung und schräg zur Luftdurchstromrichtung ausgerichtet. In Draufsicht auf die Lüftungsöffnungen gesehen sind diese von der Einlassklappe und der Auslassklappe im geschlossenen Zustand zu mindestens 90 % und in geöffnetem Zustand zu höchstens 60 % bedeckt. Die Einlassklappe und die Auslassklappe sind bevorzugt symmetrisch zu einer Fahrzeugmittelachse angeordnet und die Lüftungsöffnungen sind mit einer Toleranz von höchstens 40° parallel zu Seitenflächen des Fahrzeugs ausgerichtet.

Das Fahrzeug weist also insbesondere einen fahrwiderstandsoptimierten Bremswiderstand auf, der in dem Durchlüftungskörper angebracht ist und/oder der den Durchlüftungskörper bildet. Der Durchlüftungskörper und/oder der Bremswiderstand verfügen über vergleichsweise große Hohlkammern, die einen Fahrwiderstand vergrößern können. Dabei entsteht in diesen Hohlkammern, wo insbesondere Wärmetauscher und/oder Widerstandselemente verbaut sind, durch den Fahrtwind ein Gegendruck, der zu Verwirbelungen und somit zu einer Fahrtwiderstandserhöhung führt. Dabei liegt die Durchströmungsrichtung herkömmlicherweise in Fahrtrichtung oder entgegen der Fahrtrichtung. Solche Bremswiderstände oder Durchlüftungskörper weisen üblicherweise keine Verschlüsse auf, die ein Eindringen von Fahrtwind während einer Inaktivität verhindern. Alle Bereiche werden durchströmt, insbesondere permanent durchströmt. Es werden beispielsweise versenkbare Luftansauger verwendet, mit einer Strömungsausrichtung in Fahrtrichtung.

Bei der hier beschriebenen Konfiguration ist eine Durchströmungsrichtung der Bremswiderstände und/oder des Durchlüftungskörpers 90° zur Fahrtrichtung orientiert. Die Bremswiderstände und/oder der Durchlüftungskörper sind durch Anbauteile verkleidet. Die Bereiche an einem Lufteinlass sowie an einem Luftauslass sind durch bewegliche Klappen verschließbar. Wenn erforderlich, werden die Klappen geöffnet, um eine Durchströmung des Bremswiderstands und/oder des Durchlüftungskörpers zu ermöglichen. Einlaufbereiche und Auslaufbereiche sowie Schottwände optimieren bevorzugt eine Luftführung und minimieren Störgeräusche. Dazu befinden sich solche Schottwände und/oder Windabweiser bevorzugt auf der Luftauslassseite.

Mit der hier beschriebenen Kühlkörperabdeckung ist eine Effizienzsteigerung des Zugs möglich, da sich der Fahrwiderstand reduziert. Es wird eine energieeffiziente Belüftung der Bremswiderstände erreicht, da kleinere Lüfter mit weniger Leistung verwendet werden können, im Vergleich zu einer Konfiguration ohne Klappen. Es ist eine geringere akustische Wahrnehmbarkeit im Innenraum des Zuges und/oder außerhalb des Zuges gegeben. Dies wird insbesondere durch die verschließbaren Klappen zur Fahrtwiderstandsminimierung erreicht, die mit weniger Störungen einer Luftströmung um den Zug einhergehen.

Insgesamt ist somit ein energieeffizienteres und leiseres Fahrzeug erreichbar.

Erfindungsgemäß weisen die Einlassklappe und die Auslassklappe je ein feststehendes Unterteil näher an dem Fahrzeugdach und ein bewegliches Oberteil weiter von dem Fahrzeugdach entfernt auf. Die Unterteile bedecken die Lüftungsöffnungen in Draufsicht auf diese gesehen, insbesondere entlang parallel der Luftdurchstromrichtung gesehen, zu mindestens 25 %, insbesondere zu mindestens 35 %, und zu höchstens 60 %, insbesondere zu höchstens 50 % oder 40 %.

Gemäß zumindest einer Ausführungsform sind die Oberteile im geöffneten Zustand schräg zum Fahrzeugdach orientiert. Dabei können die Oberteile eine Rampe in Richtung weg von den Lüftungsöffnungen hin zu einer dem Fahrzeugdach abgewandten Oberkante der Unterteile bilden. Hierdurch ist eine Strömung durch den Durchlüftungskörper hindurch durch die Klappen weniger gestört.

Gemäß zumindest einer Ausführungsform geben die Einlassklappe und/oder die Auslassklappe im geöffneten Zustand die Lüftungsöffnungen mindestens zu 90 % oder vollständig frei. Dies gilt insbesondere in Draufsicht entlang der Luftdurchstromrichtung gesehen.

Insbesondere können die Einlassklappe und/oder die Auslassklappe im geöffneten Zustand mit einer Toleranz von höchstens 20° oder 10° oder 5° oder 1° parallel zum Fahrzeugdach verlaufen. Dies gilt speziell für Außenflächen der Einlassklappe und/oder die Auslassklappe. Mit anderen Worten können sich die Klappen im geöffneten Zustand an das Fahrzeugdach anschmiegen. Dies gilt insbesondere, wenn die Klappen die Lüftungsöffnungen in geöffnetem Zustand vollständig freigeben.

Gemäß zumindest einer Ausführungsform weist das Fahrzeug, insbesondere die Kühlkörperabdeckung, eine oder mehrere feststehende Schottwände auf. Das heißt, die Schottwand wird im bestimmungsgemäßen Gebrauch nicht oder nicht signifikant bewegt.

Die mindestens eine Schottwand ist mit einer Toleranz von höchstens 20°, insbesondere höchstens 10° oder 2°, senkrecht zur Fahrtrichtung orientiert. Insbesondere stehen die Schottwände senkrecht zur Fahrtrichtung.

Dabei schließt die mindestens eine Schottwand im geschlossenen Zustand der Einlassklappe und/oder der Auslassklappe bündig mit einer Außenseite und/oder einer Innenseite der Einlassklappe und/oder der Auslassklappe ab. Mit anderen Worten kann eine Kante der Schottwand, die dem Durchlüftungskörper abgewandt ist, entlang einer äußeren Kontur der Kühlkörperabdeckung verlaufen. Dies gilt speziell in einem Querschnitt senkrecht zur Fahrtrichtung gesehen.

Gemäß zumindest einer Ausführungsform ist an der Schottwand oder an zumindest einer der Schottwände oder an einigen der Schottwände oder an allen Schottwänden ein Windabweiser angebracht. Der Windabweiser überragt in geschlossenem Zustand der Einlassklappe und der Auslassklappe diese bevorzugt nicht. Das heißt, im geschlossenen Zustand der Klappen kann der Windabweiser eingefahren sein. Es ist möglich, dass die Windabweiser auf die Entlüftungsseite beschränkt sind und/oder an der Belüftungsseite nicht betrieben werden. Beispielsweise ist der Windabweiser ausfahrbar oder ausklappbar in der zugehörigen Schottwand gelagert. Das heißt in geschlossenem Zustand der Klappen kann der Windabweiser bündig mit der Schottwand abschließen, in Richtung weg von dem Durchlüftungskörper.

Weiterhin überragen die Windabweiser in geöffnetem Zustand der Einlassklappe und der Auslassklappe die zugehörige Schottwand und/oder eine Außenkontur der Kühlkörperabdeckung. Das heißt, bei geöffneten Klappen werden die Windabweiser ausgefahren, insbesondere nur an der Entlüftungsseite.

Gemäß zumindest einer Ausführungsform weist die Kühlkörperabdeckung mehrere Übergangsplatten auf. Die Übergangsplatten begrenzen die Kühlkörperabdeckung beiderseits, längs der Fahrtrichtung gesehen. Durch die Übergangsplatten ist ein Strömungsverhalten an einem Beginn und an einem Ende der Kühlkörperabdeckung, speziell entlang der Fahrtrichtung gesehen, optimierbar. Die Übergangsplatten entfalten ihre Wirkung bevorzugt nur bei geöffneten Klappen. Bei geschlossenen Klappen liegen die Übergangsplatten bevorzugt in der Außenkontur der Kühlkörperabdeckung und/oder einer Dachverkleidung des Fahrzeugs.

Dabei verschmälern sich die Übergangsplatten in Richtung weg von dem Fahrzeugdach kontinuierlich. Dies kann in Draufsicht und/oder in Seitenansicht des Fahrzeugs gelten.

Gemäß einer alternativen Ausführungsform weist die Kühlkörperabdeckung mehrere Deckplatten auf. Die Deckplatten, die durch ein dünnes Blech oder durch eine dünne Kunststoffplatte realisiert sein können und flächig gestaltet sind, sind bevorzugt parallel oder näherungsweise parallel zum Fahrzeugdach ausgerichtet. Dies gilt beispielsweise mit einer Toleranz von höchstens 10°, insbesondere höchstens 5° oder 2°. Die Deckplatten sind bevorzugt feststehend und starr, können alternativ aber auch beweglich gelagert sein und sich bei einem Öffnen und/oder Schließen der Klappen mitbewegen.

Die Deckplatten können dabei die zugehörigen Lüftungsöffnungen in Richtung weg von dem Durchlüftungskörper an einer dem Fahrzeugdach abgewandten Seite überragen. Mit anderen Worten kann die Deckplatte eine Art Vordach der zugeordneten Lüftungsöffnung darstellen.

Gemäß zumindest einer Ausführungsform ist in dem Durchlüftungskörper mindestens ein Ventilator angebracht. Der eine oder die mehreren Ventilatoren sind zur Erzeugung eines Luftstroms durch den Durchlüftungskörper eingerichtet, sodass durch den Luftstrom eine Kühlung des Bremswiderstands erfolgt. Mit anderen Worten ist durch die Ventilatoren die Luftdurchstromrichtung definiert. Eine Luftdurchströmung des Durchlüftungskörpers geht damit bevorzugt tatsächlich auf den zumindest einen Ventilator zurück und weniger oder nur untergeordnet oder nicht signifikant auf eine Eigenbewegung des Fahrzeugs. Es ist möglich, dass eine Laufrichtung und damit die Luftdurchstromrichtung mittels des Ventilators einstellbar sind, beispielsweise abhängig davon, ob das Fahrzeug vorwärts oder rückwärts fährt.

Gemäß der Ausführungsform weisen die Einlassklappe und/oder die Auslassklappe im geschlossenen Zustand einen mittleren Winkel zum Fahrzeugdach auf, der zwischen einschließlich 20° 50° liegt. Im Querschnitt gesehen kann sich dieser Winkel alternativ oder zusätzlich auf eine horizontale Linie beziehen, die im Mittel parallel zum Fahrzeugdach verläuft. Der mittlere Winkel bezieht sich beispielsweise im Querschnitt gesehen auf eine Sehne der Klappen und/oder des Fahrzeugdachs.

Weiterhin gemäß der Ausführungsform verlaufen die Einlassklappe und/oder die Auslassklappe sowie optional die mindestens eine Deckplatte längs der Fahrtrichtung sowie insbesondere quer zur Fahrtrichtung bündig mit der Dachverkleidung. Das heißt, im geschlossenen Zustand der Klappen erscheint die Kühlkörperabdeckung zusammen mit der Dachverkleidung als eine bevorzugt glatte, parallel zur Fahrtrichtung verlaufende, unstrukturierte einheitliche Fläche. Hierdurch wird im geschlossenen Zustand der Klappen ein besonders niedriger Fahrwiderstand erreicht.

Weiterhin gemäß der Ausführungsform ist das Fahrzeug ein elektrisch angetriebener Zug. Besonders bevorzugt ist der Zug für eine Maximalgeschwindigkeit von mindestens 160 km/h, insbesondere von mindestens 220 km/h oder 280 km/h, vorgesehen. Das heißt, die hier beschriebene Kühlkörperabdeckung findet insbesondere bei Hochgeschwindigkeitszügen Anwendung, bei denen der Luftwiderstand signifikant zu einem Energieverbrauch während der Fahrt bei hohen Geschwindigkeiten beiträgt. Gemäß zumindest einer Ausführungsform umfasst die Kühlkörperabdeckung einen oder mehrere Öffnungsmechanismen. Der mindestens eine Öffnungsmechanismus ist zum Öffnen und zum Schließen der Einlassklappe sowie der Auslassklappe eingerichtet. Der Öffnungsmechanismus arbeitet insbesondere pneumatisch, hydraulisch und/oder elektrisch.

Nachfolgend werden eine hier beschriebene Kühlkörperabdeckung und ein hier beschriebenes elektrisch betriebenes Fahrzeug unter Bezugnahme auf die Zeichnung anhand von Ausführungsbeispielen näher erläutert. Gleiche Bezugszeichen geben dabei gleiche Elemente in den einzelnen Figuren an. Es sind dabei jedoch keine maßstäblichen Bezüge dargestellt, vielmehr können einzelne Elemente zum besseren Verständnis übertrieben groß dargestellt sein.

Es zeigen:
Figur 1 schematische perspektivische Darstellungen von Durchlüftungskörpern für hier beschriebene Kühlkörperabdeckungen,
Figuren 2 und 3 schematische perspektivische Darstellungen von hier beschriebenen Fahrzeugen mit hier beschriebenen Kühlkörperabdeckungen,
Figuren 4 und 5 schematische perspektivische Darstellungen von Ausführungsbeispielen von hier beschriebenen Kühlkörperabdeckungen, und
Figuren 6 bis 8 schematische Schnittdarstellungen von Ausführungsbeispielen von hier beschriebenen Kühlkörperabdeckungen.

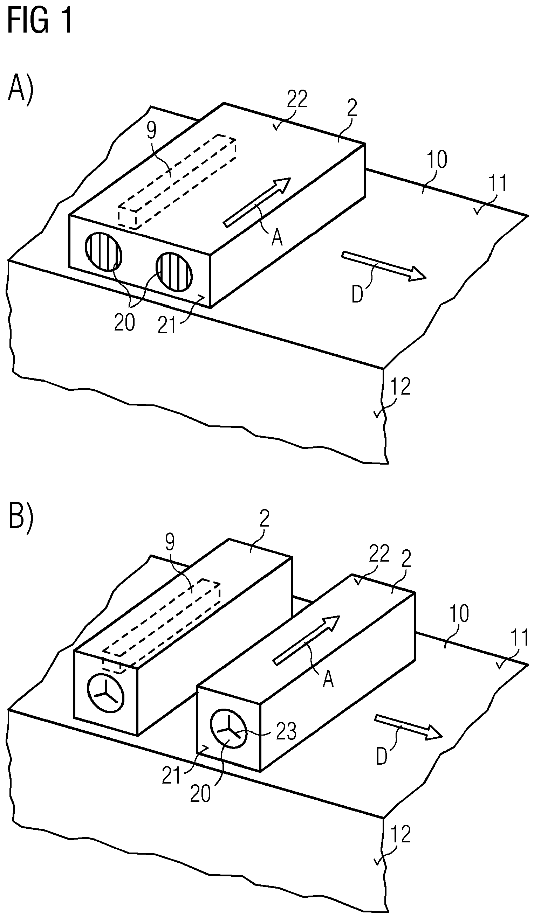

In Figur 1A ist ein Beispiel eines Durchlüftungskörpers 2 für ein elektrisch beschriebenes Fahrzeug 10 dargestellt. Der Durchlüftungskörper 2 befindet sich auf einem Fahrzeugdach 11 und weist mehrere Lüftungsöffnungen 20 auf, die an einander gegenüberliegenden Seiten des Durchlüftungskörpers 2 angebracht sind. In Figur 1A sind lediglich die Lüftungsöffnungen 20 an einer Belüftungsseite 21 dargestellt, die Lüftungsöffnungen an einer gegenüberliegenden Entlüftungsseite 22 sind nicht zu erkennen.

In dem Durchlüftungskörper 2 befinden sich mehrere Bremswiderstände 9, von denen exemplarisch nur einer schematisch dargestellt ist. Eine Kühlung der Bremswiderstände 9 erfolgt durch einen Luftstrom durch die Lüftungsöffnungen 20 hindurch, und zwar von der Belüftungsseite 21 hin zur Entlüftungsseite 22. Dadurch ist eine Luftdurchstromrichtung A gegeben, welche senkrecht zu einer Fahrtrichtung D des Fahrzeugs 10 orientiert ist.

Die Lüftungsöffnungen 20 sind beispielsweise kreisförmig gestaltet und können eine Vergitterung aufweisen. Bevorzugt sind mehrere der Durchlüftungskörper 2 entlang der Fahrtrichtung D nebeneinander angeordnet, abweichend von der Darstellung von Figur 1A. Dies gilt bevorzugt auch für alle anderen Ausführungsbeispiele.

Gemäß Figur 1B weisen die Durchlüftungskörper 2 jeweils einen Ventilator 23 auf, um den Luftstrom entlang der Luftdurchstromrichtung A definiert anzutreiben. Dabei können in jedem Durchlüftungskörper 2 nur zwei einander gegenüberliegende Lüftungsöffnungen 20 vorgesehen sein.

Eine Höhe der Durchlüftungskörper 2 liegt beispielsweise bei mindestens 0,2 m und/oder bei höchstens 0,6 m, insbesondere um 0,4 m. Die Belüftungsseiten 21 sowie die Entlüftungsseiten 22 sind näherungsweise parallel zu den Seitenflächen 12 des Fahrzeugs orientiert. Eine Ausdehnung aller Durchlüftungskörper 2 einer Kühlkörperabdeckung 1 entlang der Fahrtrichtung D liegt beispielsweise um 7,5 m. Eine Gesamtlänge der Kühlkörperabdeckung 1 beträgt beispielsweise 8,2 m.

Die Konfigurationen der Durchlüftungskörper 2, wie in den Figuren 1A und 1B dargestellt, können entsprechend in allen anderen Ausführungsbeispielen vorliegen.

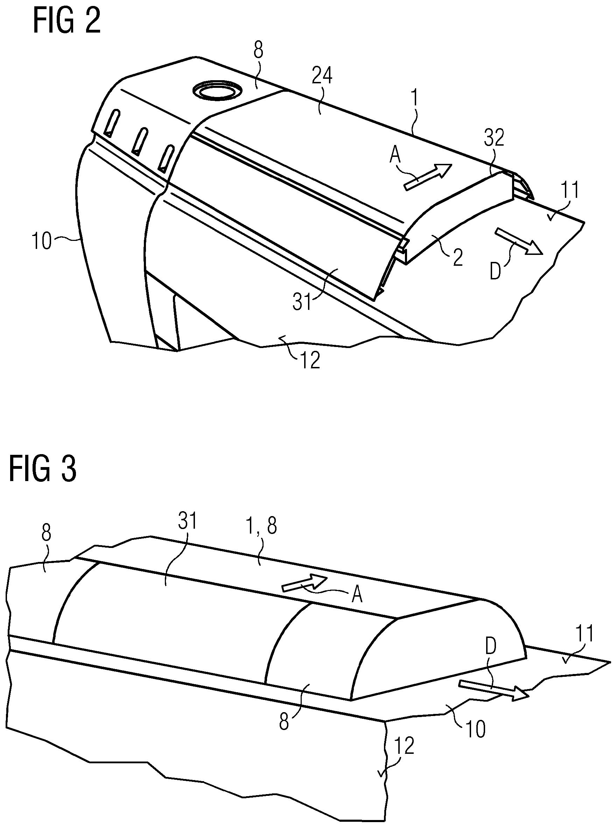

In Figur 2 ist schematisch illustriert, dass die Durchlüftungskörper 2 in der Kühlkörperabdeckung 1 untergebracht sind. Die Kühlkörperabdeckung 1 weist optional ein Gehäusedach 24 auf, das näherungsweise parallel zum Fahrzeugdach 11 ausgerichtet ist. Oberseiten der Durchlüftungskörper 2 können einen Teil des Gehäusedachs 24 bilden oder das Gehäusedach 24 überdeckt diese Oberseiten vollständig.

Dabei können sowohl das Fahrzeugdach 11, das optionale Gehäusedach 24 sowie die Fahrzeugseitenflächen 12 im Querschnitt gesehen gekrümmt gestaltet sein. Seitlich und längs der Fahrtrichtung D befindet sich an den Durchlüftungskörpern 2 eine oder, bevorzugt, mehrere Einlassklappen 31 sowie eine oder, bevorzugt, mehrere Auslassklappen 32. Die Klappen 31, 32 zusammen mit dem optionalen Gehäusedach 24 fügen sich bündig in die Dachverkleidung 8. Die Dachverkleidung 8 setzt sich, anders als in Figur 2 gezeichnet, entlang der Fahrtrichtung D beiderseits der Kühlkörperabdeckung 1 fort. Dies ist zusätzlich in Figur 3 illustriert. Das heißt, im geschlossenen Zustand der Klappen 31, 32 sind die Durchlüftungskörper 2, eventuell mit Ausnahme von deren Oberseiten, bevorzugt vollständig verborgen und bieten keine Strömungsangriffsfläche.

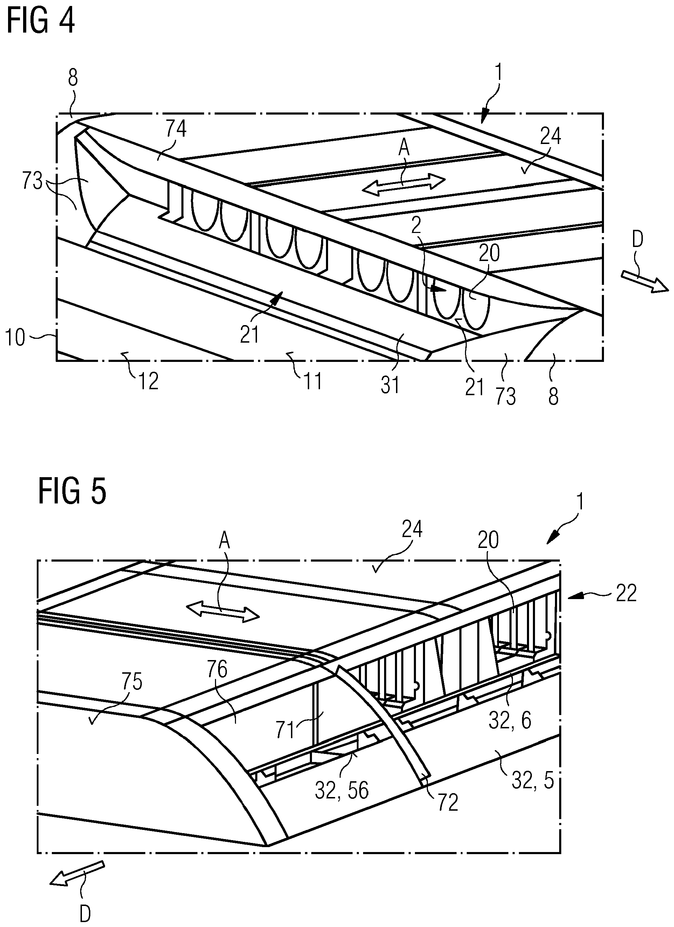

In Figur 4 ist ein Beispiel für die Gestaltung an der Belüftungsseite 21 illustriert. Die Entlüftungsseite, in Figur 4 nicht dargestellt, kann genauso ausgeführt sein. In Figur 4 ist die Einlassklappe 31 geöffnet dargestellt.

Die Einlassklappe 31 ist, beginnend am Fahrzeugdach 11, eingeklappt und verläuft in eingeklapptem Zustand näherungsweise parallel zum Fahrzeugdach 11. Die Lüftungsöffnungen 20 sind vollständig freigegeben.

Optional ist eine Deckplatte 74 vorhanden. In Richtung weg von den Durchlüftungskörpern 2 steht die Deckplatte 74 in Verlängerung des Gehäusedachs 24 über die Lüftungsöffnungen 20 über. An einem Ende und an einem Anfang der Einlassklappe 31 längs der Fahrtrichtung D verbreitert sich die Deckplatte 74 bevorzugt. Bezogen auf einen Abstand einer Außenkante der Einlassklappe 31 zu dem Durchlüftungskörper 2 weist die Deckplatte 24 zum Beispiel eine Ausdehnung von mindestens 10 % oder 20 % und/oder von höchstens 40 % oder 30 % dieses Abstands auf.

Ferner weist die Kühlkörperabdeckung 1 bevorzugt feststehende Übergangsplatten 73 auf, die sich an einem Anfang und an einem Ende der Einlassklappe 31 befinden. In Richtung weg von dem Fahrzeugdach 11 sowie in Richtung weg von den Durchlüftungskörpern 2 verschmälern sich die Übergangsplatten 73 jeweils. Solche Übergangsplatten 73 können auch in allen anderen Ausführungsbeispielen vorhanden sein.

In Figur 5 ist ein weiteres Beispiel der Kühlkörperabdeckung 1 illustriert, anhand der Entlüftungsseite 22. Die Belüftungsseite, nicht gezeichnet, kann gleich der Entlüftungsseite 22 ausgeführt sein, sofern nicht abweichend erläutert.

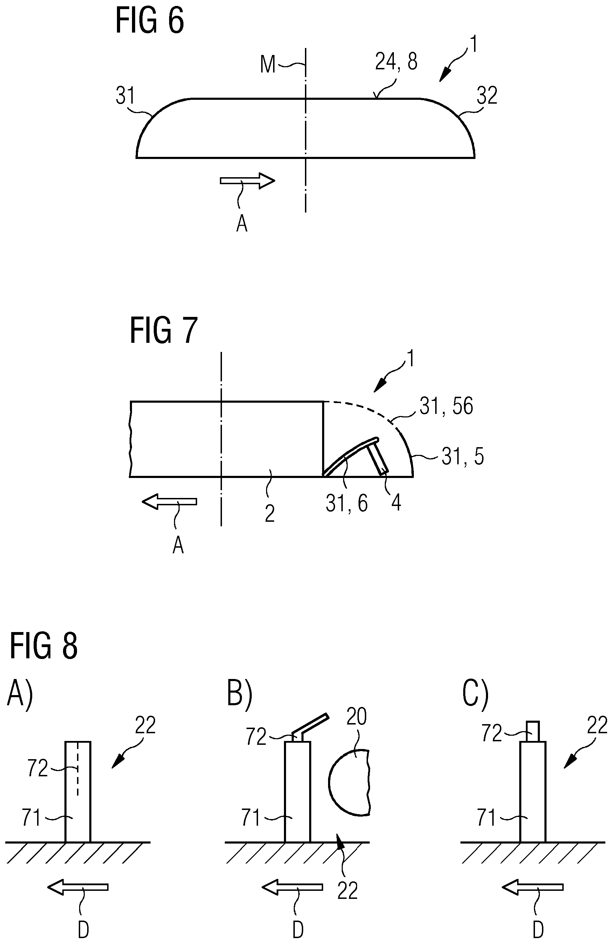

Die Auslassklappe 32 weist ein Unterteil 5 sowie ein Oberteil 6 auf. Das Unterteil 5 ist feststehend und folgt im Querschnitt gesehen einer Kontur der in Figur 5 nicht gezeichneten Dachverkleidung. An einer Oberkante 56 knickt das Oberteil 6 in geöffnetem Zustand von dem Unterteil 5 in Richtung hin zum Fahrzeugdach ab. Dadurch wird durch das Oberteil 6 zeitweise eine Rampe in Richtung weg von dem Durchlüftungskörper 2 gebildet, siehe auch Figur 7.

Optional ist eine oder sind mehrere Schottwände 71 vorhanden. Die Schottwände 71 sind senkrecht zur Fahrtrichtung D orientiert.

An den Schottwänden 71 kann sich zumindest ein Windabweiser 72 befinden, siehe auch Figur 8. In geschlossenem Zustand der Auslassklappe 32 überragt der Windabweiser 72 die zugehörige Schottwand 71 bevorzugt nicht, vergleiche Figur 8A. Bei geöffneter Auslassklappe 32 dagegen steht der Windabweiser 72 über die zugehörige Schottwand 71 über, siehe die Figuren 8B und 8C. Dabei kann der Windabweiser 72 gerade verlaufen, in Verlängerung der Schottwand 71, siehe Figur 8C. Alternativ ist es möglich, dass der Windabweiser 72 entgegen der Fahrtrichtung D abgewinkelt ist, siehe Figur 8B.

Bevorzugt werden solche Windabweiser 72 nur an der Entlüftungsseite 22 aktiviert und nicht an der Belüftungsseite 21.

Durch die Schottwand 71 zusammen mit dem optionalen Windabweiser 22 wird im Bereich der Lüftungsöffnungen 20 ein Strömungsunterdruck erzeugt, sodass die durch den Durchlüftungskörper 2 geführte Luft leichter aus der Lüftungsöffnung 20 an der Entlüftungsseite 22 entweichen kann.

Optional befindet sich vor der in Fahrtrichtung ersten Schottwand 71 eine Leerkammer 76. In der Leerkammer 76 befindet sich keine Lüftungsöffnungen 20. Alternativ beginnen die Schottwand 71 mit dem optionalen Windabweiser 72 und den zugeordneten Lüftungsöffnungen 20 direkt an einer Stirnseite 75 der Kühlkörperabdeckung 1. Eine Ausdehnung der optionalen Leerkammer 76 entlang der Fahrtrichtung D liegt beispielsweise bei mindestens 0,1 m oder 0,2 m und/oder bei höchstens 0,8 m oder 0,6 m. Bevorzugt verfügt die Leerkammer 76 über eine eigene Auslassklappe 32, die etwa abhängig von einer Geschwindigkeit des Fahrzeugs, beispielsweise nur bei vergleichsweise hohen Geschwindigkeiten, geöffnet wird.

In Figur 6 ist illustriert, dass sich das Gehäuse 1 im Querschnitt gesehen in die Dachverkleidung 8 fügt und ein Profil der Dachverkleidung 8 im geschlossenen Zustand der Klappen 31, 32 nicht ändert.

Das Fahrzeug 10, bei dem es sich beispielsweise um einen Hochgeschwindigkeitszug handelt, weist etwa einen K4-Wert im Bereich um 5 m² auf. Durch die hier beschriebene Kühlkörperabdeckung 1 wird der K4-Wert um ungefähr 0,3 m² verringert, gegenüber einer Konfiguration ohne solche Klappen 31, 32. Das heißt, mittels der Klappen 31, 32 ist der K4-Wert und damit der Fahrwiderstand um zirka 5 % reduzierbar. Dies gilt insbesondere bei Geschwindigkeiten oberhalb von 120 km/h.

Die in den Figuren gezeigten Komponenten folgen, sofern nicht anders kenntlich gemacht, bevorzugt in der angegebenen Reihenfolge jeweils unmittelbar aufeinander. Sich in den Figuren nicht berührende Schichten sind bevorzugt voneinander beabstandet. Soweit Linien parallel zueinander gezeichnet sind, sind die entsprechenden Flächen bevorzugt ebenso parallel zueinander ausgerichtet. Ebenfalls, soweit nicht anders kenntlich gemacht, sind die relativen Positionen der gezeichneten Komponenten zueinander in den Figuren korrekt wiedergegeben.

Der Schutzumfang wird durch die beiliegenden Ansprüche definiert.

## Patentansprüche

1. Elektrisch betriebenes Fahrzeug (10), mit
- einem Fahrzeugdach (11),
- mindestens einer Kühlkörperabdeckung (1), mit mindestens einem Durchlüftungskörper (2) mit Lüftungsöffnungen (20) und mit einer Luftdurchstromrichtung (A) quer zu einer Fahrtrichtung (D) des Fahrzeugs (10), mindestens einer Einlassklappe (31) an einer Belüftungsseite (21) des Durchlüftungskörpers (2) und mindestens einer Auslassklappe (32) an einer Entlüftungsseite (22) des Durchlüftungskörpers (2), wobei die Einlassklappe (31) und die Auslassklappe (32) in geschlossenem Zustand längs der Fahrtrichtung (D) und schräg zur Luftdurchstromrichtung (A) ausgerichtet sind, und die Lüftungsöffnungen (20) in Draufsicht gesehen von der mindestens einen Einlassklappe (31) und der mindestens einen Auslassklappe (32) zusammengenommen in geschlossenem Zustand zu mindestens 90 % und in geöffnetem Zustand zu höchstens 60 % überdeckt sind, und
- zumindest einem Bremswiderstand (9) in dem Durchlüftungskörper (2),
wobei
- die Lüftungsöffnungen (20) mit einer Toleranz von höchstens 40 Grad parallel zu Seitenflächen (12) des Fahrzeugs (10) ausgerichtet sind,
- die Einlassklappe (31) und die Auslassklappe (32) je ein feststehendes Unterteil (5) näher an dem Fahrzeugdach (11) und ein bewegliches Oberteil (6) weiter von dem Fahrzeugdach (11) entfernt aufweisen,
- die Einlassklappe (31) und die Auslassklappe (32) symmetrisch zu einer Fahrzeugmittelachse (M), welche senkrecht zur Fahrtrichtung (D) orientiert ist und vertikal steht, angeordnet sind, und
- die Unterteile (5) die Lüftungsöffnungen (20), in Draufsicht entlang der Luftdurchstromrichtung (A) gesehen, zu mindestens 25 % und zu höchstens 60 % überdecken.

2. Fahrzeug (10) nach dem vorhergehenden Anspruch,
bei dem die Oberteile (6) in geöffnetem Zustand schräg zum Fahrzeugdach (11) verlaufen, im Querschnitt senkrecht zur Fahrtrichtung (D) gesehen, sodass die Oberteile (6) je eine Rampe in Richtung weg von den Lüftungsöffnungen (20) hin zu einer vom Fahrzeugdach (11) abgewandten Oberkante (56) der Unterteile (5) bilden.

3. Fahrzeug (10) nach Anspruch 1,
bei dem die Einlassklappe (31) und die Auslassklappe (32) in geöffnetem Zustand die Lüftungsöffnungen (20), in Draufsicht entlang der Luftdurchstromrichtung (A) gesehen, zu mindestens 90 % freigeben, wobei Außenflächen der Einlassklappe (31) und der Auslassklappe (32) in geöffnetem Zustand mit einer Toleranz von höchstens 10 Grad parallel zum Fahrzeugdach (11) verlaufen.

4. Fahrzeug (10) nach einem der Ansprüche 1 bis 3,
bei dem an dem Fahrzeugdach (11) mehrere feststehende Schottwände (71) angebracht sind, wobei die Schottwände (71) mit einer Toleranz von höchstens 20 Grad senkrecht zur Fahrtrichtung (D) orientiert sind, und
wobei die Schottwände (71) in Richtung weg von dem Durchlüftungskörper (2) mit der zugehörigen Einlassklappe (31) und/oder der zugehörigen Auslassklappe (32) in deren geschlossenem Zustand bündig abschließen.

5. Fahrzeug (10) nach dem vorhergehenden Anspruch,
bei dem an den Schottwänden (71) je ein Windabweiser (72) angebracht ist,
wobei die Windabweiser (72) in geschlossenem Zustand der Einlassklappe (31) und der Auslassklappe (32) in oder an die zu-gehörige Schottwand (71) eingefahren sind und diese und/oder die zugehörige Schottwand (71) nicht überragen, und wobei die Windabweiser (72) in geöffnetem Zustand der Einlassklappe (31) und der Auslassklappe (32) ausgefahren sind und die zugehörige Schottwand (71) überragen.

6. Fahrzeug (10) nach einem der Ansprüche 1 bis 5,
bei dem die Kühlkörperabdeckung (1) mehrere Übergangsplatten (73) aufweist, die die Kühlkörperabdeckung (1) beiderseits entlang der Fahrtrichtung (D) begrenzen, wobei sich die Übergangsplatten (73) in Richtung weg von dem Fahrzeugdach (11) kontinuierlich verschmälern.

7. Fahrzeug (10) nach einem der Ansprüche 1 bis 5,
bei dem die Kühlkörperabdeckung (1) mehrere Deckplatten (74) aufweist, welche mit einer Toleranz von höchstens 10° parallel zum Fahrzeugdach (11) ausgerichtet sind und welche die Lüftungsöffnungen (20) in Richtung weg von dem Durchlüftungs-körper (2) überragen.

8. Fahrzeug (10) nach einem der Ansprüche 1 bis 6,
bei dem in dem Durchlüftungskörper (2) mindestens ein Ventilator (23) zur Erzeugung eines Luftstroms durch den Durchlüftungskörper (2) zur Kühlung des Bremswiderstands (9) angebracht ist,
wobei Außenflächen der Einlassklappe (31) und/oder der Auslassklappe (32) in geschlossenem Zustand einen mittleren Winkel zum Fahrzeugdach (11) zwischen einschließlich 20 Grad und 50 Grad aufweisen und längs der Fahrtrichtung (D) bündig mit einer Dachverkleidung (8) verlaufen, und
wobei das Fahrzeug (10) ein elektrisch angetriebener Zug ist, der für eine Maximalgeschwindigkeit von mindestens 160 km/h vorgesehen ist.

9. Fahrzeug nach einem der Ansprüche 1 bis 8, wobei die Kühlkörperabdeckung (1) mindestens einen Öffnungsmechanismus (4) zum Öffnen und zum Schließen der Einlassklappe (31) sowie der Auslassklappe (32) umfasst.

## Claims

1. Electrically operated vehicle (10), having
- a vehicle roof (11),
- at least one heat sink cover (1), with at least one air throughflow body (2) having vent openings (20) and having an air throughflow direction (A) transverse to a direction of travel (D) of the vehicle (10), at least one inlet flap (31) on an air intake side (21) of the air throughflow body (2) and at least one outlet flap (32) on an air outflow side (22) of the air throughflow body (2), wherein, in the closed state, the inlet flap (31) and the outlet flap (32) are oriented along the direction of travel (D) and obliquely to the air throughflow direction (A), and, seen in plan view, the vent openings (20) are covered by the at least one inlet flap (31) and the at least one outlet flap (32) taken together, in the closed state, by at least 90% and, in the open state by no more than 60%, and
- at least one braking resistor (9) in the air throughflow body (2),
wherein
- the vent openings (20) are oriented parallel to side surfaces (12) of the vehicle (10) with a tolerance of no more than 40°,
- the inlet flap (31) and the outlet flap (32) each have a stationary lower part (5) closer to the vehicle roof (11) and a movable upper part (6) further removed from the vehicle roof (11),
- the inlet flap (31) and the outlet flap (32) are arranged symmetrically to a vehicle central axis (M) which is oriented perpendicularly to the direction of travel (D) and stands vertically, and
- seen in a plan view along the air throughflow direction (A), the lower parts (5) cover the vent openings (20) by at least 25% and by no more than 60%.

2. Vehicle (10) according to the preceding claim,
in which, in the open state, the upper parts (6) extend obliquely to the vehicle roof (11) as seen in cross-section perpendicularly to the direction of travel (D), so that the upper parts (6) each form a ramp in the direction away from the vent openings (20) towards an upper edge (56) of the lower parts (5) facing away from the vehicle roof (11).

3. Vehicle (10) according to claim 1,
in which, in the open state, the inlet flap (31) and the outlet flap (32) uncover the vent openings (20), as seen in plan view along the air throughflow direction (A), by at least 90%, wherein, in an open state, external surfaces of the inlet flap (31) and of the outlet flap (32) extend parallel to the vehicle roof (11) with a tolerance of no more than 10°.

4. Vehicle (10) according to one of claims 1 to 3,
in which a plurality of stationary bulkhead walls (71) are mounted on the vehicle roof (11), wherein the bulkhead walls (71) are oriented perpendicular to the direction of travel (D) with a tolerance of no more than 20°, and
wherein, in the direction away from the air throughflow body (2) with the associated inlet flap (31) and/or the associated outlet flap (32), the bulkhead walls (71) terminate flush in their closed state.

5. Vehicle (10) according to the preceding claim,
in which a wind deflector (72) is mounted on each of the bulkhead walls (71),
wherein, in the closed state of the inlet flap (31) and the outlet flap (32), the wind deflectors (72) are retracted into or onto the associated bulkhead wall (71) and do not extend beyond these and/or the associated bulkhead wall (71), and wherein, in the open state of the inlet flap (31) and the outlet flap (32), the wind deflectors (72) are extended, and extend beyond the associated bulkhead wall (71).

6. Vehicle (10) according to one of claims 1 to 5,
in which the heat sink cover (1) has a plurality of transition panels (73) which delimit the heat sink cover (1) on both sides along the direction of travel (D), wherein the transition panels (73) narrow continuously in the direction away from the vehicle roof (11).

7. Vehicle (10) according to one of claims 1 to 5,
in which the heat sink cover (1) has a plurality of cover panels (74) which are oriented parallel to the vehicle roof (11) with a tolerance of no more than 10° and which extend beyond the vent openings (20) in the direction away from the air throughflow body (2).

8. Vehicle (10) according to one of claims 1 to 6,
in which at least one fan (23) for generating an airflow through the air throughflow body (2) is mounted in the air throughflow body (2) for cooling the braking resistor (9),
wherein, in the closed state, external surfaces of the inlet flap (31) and/or of the outlet flap (32) have an average angle to the vehicle roof (11) of between 20° and 50°, inclusive, and extend flush with a roof covering (8) along the direction of travel (D), and
wherein the vehicle (10) is an electrically operated train provided for a maximum speed of at least 160 km/h.

9. Vehicle according to one of claims 1 to 8, wherein
the heat sink cover (1) comprises at least one opening mechanism (4) for opening and closing the inlet flap (31) and the outlet flap (32).

## Revendications

1. Véhicule (10) à fonctionnement électrique, comprenant
- un toit (11) de véhicule,
- au moins un recouvrement (1), formant refroidisseur, comprenant au moins un corps (2) de ventilation ayant des ouïes (20) de ventilation et ayant un sens (A) du courant de passage de l'air transversal à un sens (D) de roulement du véhicule (10), au moins un volet (31) d'entrée d'un côté (21) d'alimentation en air du corps (2) de ventilation et au moins un volet (32) de sortie d'un côté (22) d'évacuation de l'air du corps (2) de ventilation, dans lequel le volet (31) d'entrée et le volet (32) de sortie sont à l'état fermé dirigés suivant le sens (D) de roulement et inclinés par rapport au sens (A) du courant du passage de l'air et les ouïes (20) de ventilation sont, considéré en vue en plan, recouvertes par le au moins un volet (31) d'entrée et le au moins un volet (32) de sortie pris ensemble à l'état fermé pour au moins 90% et à l'état ouvert pour au plus 60%, et
- au moins une résistance (9) de frein dans le corps (2) de ventilation,
dans lequel
- les ouïes (20) de ventilation sont avec une tolérance de 40 degrés au plus dirigées parallèlement aux surfaces (12) latérales du véhicule (10),
- le volet (31) d'entrée et le volet (32) de sortie ont chacun une partie (5) inférieure fixe près du toit (11) du véhicule et une partie (6) supérieure mobile plus loin du toit (11) du véhicule,
- le volet (31) d'entrée et le volet (32) de sortie sont disposés symétriquement par rapport à un axe (M) médian du véhicule, qui est orienté perpendiculairement au sens (D) de roulement et qui est vertical, et
- les parties (5) inférieures recouvrent les ouïes (20) de ventilation, considéré en vue en plan suivant le sens (A) du courant de passage de l'air, pour au moins 25% et pour au plus 60%.

2. Véhicule (10) suivant la revendication précédente,
dans lequel les parties (6) supérieures s'étendent à l'état ouvert en oblique par rapport au toit (11) du véhicule, considéré en section transversale perpendiculairement au sens (D) de roulement, de manière à ce que les parties (6) supérieures forment chacune une rampe en direction s'éloignant des ouïes (20) d'aération vers un bord (56) supérieur, loin du toit (11) du véhicule, des parties (5) inférieures.

3. Véhicule (10) suivant la revendication 1,
dans lequel le volet (31) d'entrée et le volet (32) de sortie dégagent pour au moins 90% dans l'état d'ouverture les ouïes (20) d'aération, considéré en vue en plan suivant le sens (A) du courant de passage de l'air, dans lequel des surfaces extérieures du volet (31) d'entrée et du volet (32) de sortie s'étendent à l'état ouvert avec une tolérance d'au plus 10 degrés parallèlement au toit (11) du véhicule.

4. Véhicule (10) suivant l'une des revendications 1 à 3,
dans lequel sur le toit (11) du véhicule sont mises plusieurs parois (71) fixes de cloisonnement, les parois (71) de cloisonnement étant orientées avec une tolérance de 20 degrés au plus perpendiculairement au sens (D) de roulement, et
dans lequel les parois (71) de cloisonnement sont à affleurement dans la direction loin du corps (2) de ventilation avec le volet (31) d'entrée associé et/ou avec le volet (32) de sortie associé dans leur état fermé.

5. Véhicule (10) suivant la revendication précédente,
dans lequel respectivement un déflecteur (72) de vent est mis sur les parois (71) de cloisonnement,
dans lequel les déflecteurs (72) de vent entrent à l'état fermé du volet (31) d'entrée et du volet (32) de sortie dans ou sur la paroi (71) de cloisonnement, qui leur appartient, et ne dépassent pas de ceux-ci et/ou de la paroi (71) de cloisonnement, qui leur appartient et dans lequel les déflecteurs (72) de vent sont sortis à l'état ouvert du volet (31) d'entrée et du volet (32) de sortie et dépassent la paroi (71) de cloisonnement, qui leur appartient.

6. Véhicule (10) suivant l'une des revendications 1 à 5,
dans lequel le recouvrement (1) formant refroidisseur a plusieurs plaques (73) de transition, qui délimitent le recouvrement (1) de refroidisseur des deux côtés suivant le sens (D) de roulement, les plaques (73) de transition se rétrécissant continuellement en s'éloignant du toit (11) du véhicule.

7. Véhicule (10) suivant l'une des revendications 1 à 5,
dans lequel le recouvrement (1) formant refroidisseur a plusieurs plaques (74) de couverture, qui avec une tolérance de 10° au plus sont orientées parallèlement au toit (11) du véhicule et qui dépassent des ouïes (20) de ventilation dans la direction s'éloignant du corps (2) de ventilation.

8. Véhicule (10) suivant l'une des revendications 1 à 6,
dans lequel dans le corps (2) de ventilation est mis au moins un ventilateur (23) de production d'un courant d'air dans le corps (2) de ventilation pour le refroidissement de la résistance (9) de frein, dans lequel des surfaces extérieures du volet (31) d'entrée et/ou du volet (32) de sortie font à l'état fermé un angle moyen avec le toit (11) du véhicule entre y compris 20 degrés et 50 degrés et s'étendent le long du sens (D) de roulement à affleurement avec un habillage (8) de toit, et
dans lequel le véhicule (10) est un train à entraînement électrique, qui est prévu pour une vitesse maximum d'au moins 160 km/h.

9. Véhicule suivant l'une des revendications 1 à 8, dans lequel le recouvrement (1) formant refroidisseur comprend au moins un mécanisme (4) d'ouverture, pour ouvrir et pour fermer le volet (31) d'entrée ainsi que le volet (32) de sortie.
